# EUROPÄISCHE PATENTSCHRIFT

(11) **EP 2 789 232 B1**
(45) Veröffentlichungstag und Bekanntmachung des Hinweises auf die Patenterteilung: **12.10.2016**
(21) Anmeldenummer: 14401041.0
(22) Anmeldetag: 08.04.2014
(51) Int. Cl.: A01M 7/00

(54) **Feldspritze**
Agricultural sprayer
Pulvérisateur

(30) Priorität: 11.04.2013 DE 102013103620
(43) Veröffentlichungstag der Anmeldung: 15.10.2014
(73) Patentinhaber: Amazonen-Werke H. Dreyer GmbH & Co. KG, 49205 Hasbergen (DE)
(72) Erfinder: Ehlen, Volker, 49205 Hasbergen (DE); Schürmann, Lars, 49545 Tecklenburg (DE)

(56) Entgegenhaltungen:
- EP-A1- 1 444 893
- EP-A1- 2 510 785
- EP-A2- 1 958 506
- EP-A2- 2 213 164

## Beschreibung

Die Erfindung betrifft eine Feldspritze gemäß des Oberbegriffes des Patentanspruches 1.

Bei einem aus EP 1 958 506 A bekannten Flüssigkeits-Fördersystem dieser Art wird nur eine Brühetank-Schnell-Füllfunktion von der nicht selbstansaugenden Kreiselpumpe ausgeführt, während die Reinigungsfunktion, die Einspülfunktion, die Rührfunktion, die Sprühfunktion und die Entlüftungsfunktion von der selbstansaugenden Pumpe, beispielsweise einer Membranpumpe, ausgeführt werden. Die selbstansaugende Pumpe führt die Entlüftungsfunktion für die nicht selbstansaugende Kreiselpumpe in einer Parallelleitungsschleife einer an den Klarwasser-Ansauganschluss angeschlossenen Füllleitung von der Saugseite der Kreiselpumpe her durch. Die Effizienz des Flüssigkeits-Fördersystems lässt zu wünschen übrig, da die Hauptfunktionen von der Membranpumpe ausgeführt werden, und die an sich leistungsstarke Kreiselpumpe nur für die Schnellfüllfunktion eingesetzt wird. Um eine für die Mehrzahl der Grundfunktionen ausreichende Förderleistung und Standfestigkeit der Membranpumpe sicherzustellen, benötigt diese erhebliche Baugröße und ist sie teuer und schwer. Da sie im zumindest bei der Sprühfunktion Brühe führenden Teil des Netzes arbeitet, muss sie gegen in die Brühe eingebrachte Zusatzstoffe resistent sein.

Membranpumpen haben zwar den funktionellen Vorteil der Selbstansaugung und eines hohen Förderdrucks. Große Volumenströme bedingen jedoch großen Bauraum und hohes Gewicht. Kreiselpumpen haben für vergleichbare Volumenströme wesentlich kleinere Baugröße und geringeres Gewicht. Außerdem kann eine Kreiselpumpe selbst bei geschlossener Druckseite ohne Schaden betrieben werden. Der funktionelle Nachteil von Kreiselpumpen besteht darin, dass sie nicht selbstansaugend sind, sondern erst entlüftet werden müssen.

Der Erfindung liegt die Aufgabe zugrunde, ein Flüssigkeits-Fördersystem, insbesondere für eine Feldspritze, zu schaffen, das mit gesteigerter Effizienz und hoher Funktionssicherheit betreibbar ist.

Die gestellte Aufgabe wird mit den Merkmalen des Patentanspruches 1 gelöst.

Das Flüssigkeits-Fördersystem ist mit gesteigerter Effizienz betreibbar, weil die robuste und leistungsfähige Kreiselpumpe alle Hauptfunktionen ausführt, während die selbstansaugende Pumpe nur für die Entlüftung der Kreiselpumpe und die Reinigungsfunktion eingesetzt wird. Sie kann relativ klein bauen und wird bewusst aus dem Kontakt mit der Brühe bzw. darin enthaltenen Zusatzstoffen gehalten und kann eine funktionssichere und dennoch kostengünstige Klarwasser-Pumpe sein. Der Klarwasser führende Teil des Netzes wird nur dann mit dem zumindest während der Sprühfunktion Brühe führenden Teil verbunden, wenn die Kreiselpumpe zu entlüften oder auch der ansonsten Brühe führende Teil des Netzes zu reinigen ist, d.h., wenn in diesem Teil des Netzes keine Brühe zirkuliert bzw. die Kreiselpumpe nicht in Betrieb ist. Sobald die Kreiselpumpe im Betrieb ist und die Hauptfunktionen ausführt, kann die selbstansaugende Pumpe sogar abgeschaltet werden. Allerdings ist es durchaus möglich, speziell während der Füllfunktion sozusagen durch den zusätzlichen Betrieb der selbstansaugenden Pumpe über die Reinigungsfunktion oder einem zusätzlichen Ventil zum Befüllen das Füllen des Brühetanks mit Klarwasser zu unterstützen.

Es ist zwar aus DD 202 752 A und EP 1 157 601 A bekannt, eine Kreiselpumpe und eine Ringpumpe oder selbstansaugende Kreiselpumpe parallel zu betreiben, um an der Saugseite der nicht selbstansaugenden Kreiselpumpe Unterdruck zu erzeugen, bis die nicht selbstansaugende Kreiselpumpe nass läuft. Jedoch ist dieses Flüssigkeits-Fördersystem für einen Gülletank konzipiert, aus dem Gülle unter Schwerkrafteinfluss ausgebracht wird. Ähnlich ist zwar aus DE 20 2004 015 338 U1, Fig. 3, ein Gülle-Pumpsystem bekannt, bei dem eine nicht selbstansaugende Kreiselpumpe durch eine in einem Tank untergebrachte Vakuumpumpe entlüftet wird. Die Kreiselpumpe dient nur zum Füllen des Gülletanks. Das Ausbringen der Gülle erfolgt unter Schwerkraft. Von Interesse sind ferner: EP 2 510 785 A1, EP 2 213 164 A2 und EP 1 4444 893 A1.

Bei einer zweckmäßigen Ausführungsform des erfindungsgemäßen Fördersystems ist der Klarwasser führende Teil des Netzes von dem ansonsten Brühe führenden Teil des Netzes über ein 2/2-Wegeventil isoliert. Das 2/2-Wegeventil kann als Kugelventil ausgebildet sein und wird von der Steuerung oder gegebenenfalls manuell zwischen einer Absperrstellung und einer Durchgangsstellung umgestellt.

Auch möglich ist ferner zwischen der Kreiselpumpe, dem 2/2-Wegeventil und der Einspülschleuse ein 3/2-Wegeventil vorgesehen. Dieses 3/2-Wegeventil kann als Kugelventil ausgebildet sein. Insbesondere handelt es sich um ein 3/2-Wege-Druckregelventil, gegebenenfalls sogar ein Proportional-Druckregelventil. Das 3/2-Wegeventil steuert nicht nur die Sprühfunktion, die Füllfunktion, die Rührfunktion und die Aktivierung der Einspülschleuse, sondern auch die Entlüftungsfunktion für die nicht selbstansaugende Kreiselpumpe.

Auch kann es sinnvoll sein, zwischen dem Klarwasser-Ansauganschluss und der Saugseite der Kreiselpumpe und einem Einfüllanschluss des Brühetanks ein 3/3-Wegeventil angeordnet. Dieses 3/3-Wegeventil wird für die Füllfunktion, die Entlüftungsfunktion, die Sprühfunktion und die Rührfunktion mitbenutzt.

Ferner ist es zweckmäßig, wenn zwischen dem 3/3-Wegeventil und dem Einfüllanschluss des Brühtanks ein weiteres 3/3-Wegeventil mit einer Kurzschlussschleife angeordnet ist, an das ein im Brühe führenden Teil des Netzes angeordneter Füllstrang angeschlossen ist. Dieses 3/3-Wegeventil steuert den Füllvorgang, ferner vorzugsweise einen Spülvorgang der Kreiselpumpe zum Austreiben von Lufteinschlüssen nach der Entlüftung und eine gegebenenfalls notwendige Brühetank-Entleerfunktion über die Kurzschlussschleife.

Diese Brühetank-Entleerfunktion wird von der Kreiselpumpe ausgeführt, die Brühe über den Entnahmeanschluss des Brühetanks ansaugt und über das 3/3-Wegeventil mit der Kurzschlussschleife sowie das 3/3-Wegeventil zum Klarwasser-Ansauganschluss fördert, der für diese Funktion gegebenenfalls an einem Sammelbehälter angeschlossen wird oder in einen Graben oder auf den Boden entleert.

Um die Reinigungsfunktion nicht notwendigerweise nur bei Verfügbarkeit von Klarwasser am Klarwasser-Ansauganschluss ausführen zu können, oder gegebenenfalls sogar die Entlüftungsfunktion, ist es zweckmäßig, wenn der Klarwasser führende Teil des Netzes an einen Klarwasserbehälter angeschlossen ist, der mit der selbstansaugenden Pumpe verbunden und aus dem Klarwasser-Sauganschluss vorab befüllbar ist, um einen Klarwasser-Puffer bereitzustellen.

Weiterhin ist zweckmäßig an die Druckseite der selbstansaugenden Pumpe über eine Bypassleitung ein Klarwasser-3/3-Wegeventil angeschlossen, von welchem eine Reinigungsleitung zu wenigstens einem Reinigungsanschluss oder einer Reinigungsdüse im Brühetank und eine Füllleitung zu einem Füll/Entnahme-Anschluss im Klarwasserbehälter führen. Dieses 3/3-Wegeventil steuert somit die Funktionen der Befüllung des Klarwasserbehälters und die Reinigungsfunktion im Brühetank.

Zweckmäßig ist ferner zwischen dem Klarwasserbehälter und der selbstansaugenden Pumpe ein 3/2-Wegeventil mit Kurzschlussschleife angeordnet. Dieses steuert auch die Befüllung des Klarwassertanks und die Entlüftungsfunktion, bei der über die Kurzschlussschleife Klarwasser aus dem Klarwasser-Ansauganschluss von der selbstansaugenden Pumpe über die Kreiselpumpe und gegebenenfalls bis in den Brühetank gepumpt wird.

Zweckmäßig ist zwischen dem 3/3-Wegeventil beim Klarwasser-Ansauganschluss und dem Klarwasser-Ansauganschluss eine, vorzugsweise durch ein Rückschlagventil abgesicherte, Saugleitung oder ein Saugschlauch vorgesehen, der zum 3/2-Wegeventil mit der Kurzschlussschleife abzweigt. Diese Saugleitung kann ausreichend lang gestaltet sein (Saugschlauch), um beispielsweise Klarwasser aus einem Graben oder Brunnen selbst über größere Höhen anzusaugen.

Um die Spülfunktion zum Austreiben von Lufteinschlüssen beim Entlüften der Kreiselpumpe mitsteuern zu können, und auch die Sprühfunktion, die Rührfunktion wie auch die Aktivierung der Einspülschleuse, ist zwischen einem Entnahmeanschluss im Brühetank und der Saugseite der Kreiselpumpe ein 2/2-Wege-Entnahmeventil angeordnet, das auch bei der Entlüftungsfunktion auf Durchgang geschaltet ist.

Bei einer zweckmäßigen Ausführungsform handelt es sich bei der selbstansaugenden Pumpe um eine Kolbenmembranpumpe für Klarwasser.

Die nicht selbstansaugende Kreiselpumpe ist zweckmäßig mit einer Förderleistung bis zu 1.000 l/min ausgelegt, während die Kolbenmembranpumpe bei kompakter Bauform und geringem Gewicht auf eine Förderleistung von nur etwa 100 - 250 l/min ausgelegt sein kann.

Bei der Entlüftungsfunktion durch die selbstansaugende Pumpe wird Klarwasser zweckmäßig über die Druckseite der Kreiselpumpe bis in den Brühetank gepumpt, um Lufteinschlüsse weitgehend aus der Kreiselpumpe und den Leitungen auszutreiben.

Schließlich kann es zweckmäßig sein, während der Füllfunktion mit der betriebenen Kreiselpumpe die von der selbstansaugenden Pumpe ausgeführte Reinigungsfunktion mit Klarwasser als Zusatzfüllfunktion des Brühetanks zu nutzen, um eine optimal große Füllförderleistung und damit ein möglichst rasches Füllen des Brühetanks sicherzustellen.

Anhand der Zeichnungen werden Ausführungsformen des Erfindungsgegenstandes erläutert. Es zeigen:
- Fig. 1: ein Blockschaltbild eines Flüssigkeits-Fördersystems, beispielsweise in einer Feldspritze, in drucklosem Zustand,
- Fig. 2: das Flüssigkeits-Fördersystem von Fig. 1 bei einer Entlüftungsfunktion,
- Fig. 3: das Flüssigkeits-Fördersystem von Fig. 1 bei einer Reinigungsfunktion und einer Spülfunktion, und
- Fig. 4: das Flüssigkeits-Fördersystem bei einer Füllfunktion.

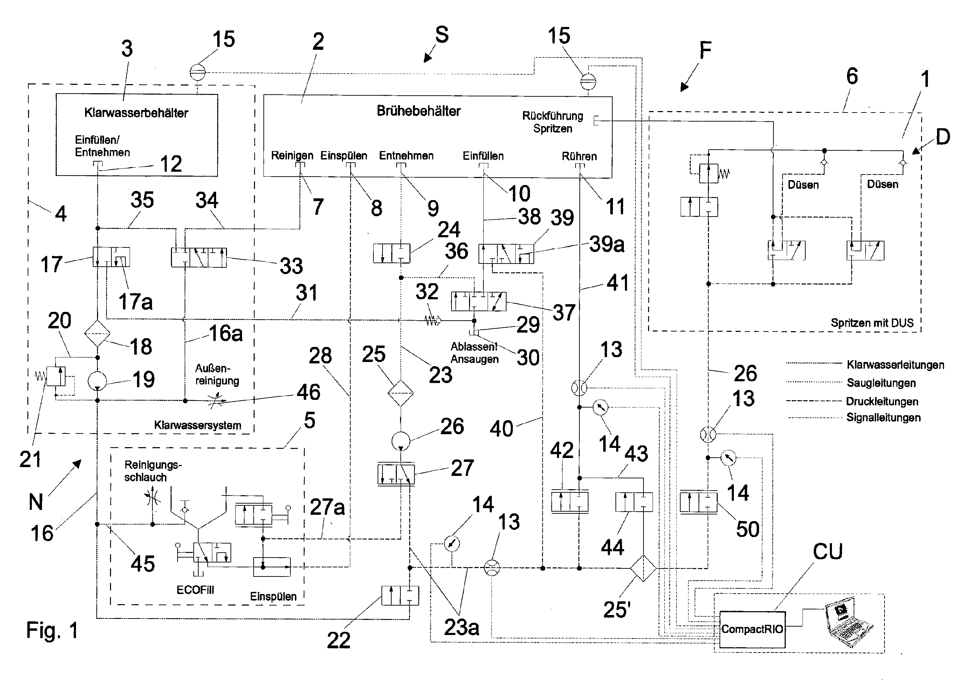

Fig. 1 zeigt ein Flüssigkeits-Fördersystem S, beispielsweise in einer Feldspritze F, die in einem Sprühsystemgestänge 6 ein Düsensystem D mit Ventilanordnungen 1 enthält. Das Flüssigkeits-Fördersystem S weist ein Leitungs- und/oder Schlauchnetz N auf, in welches ein Brühetank 2, optional ein Klarwasserbehälter 3, ein Klarwassersystem 4, eine Einspülschleuse 5 für Zusätze, das Sprühsystem 6 sowie ein Klarwasser-Ansauganschluss 29 (gegebenenfalls in einem Behälter 30) eingegliedert sind. Der Behälter 30 kann ein Graben oder ein Brunnen oder eine Klarwasserversorgung sein und ist nicht Teil des Fördersystems. Klarwasser bedeutet in diesem Zusammenhang nicht notwendigerweise Trinkwasser, sondern allgemein Brauchwasser.

Der Brühetank 2 enthält wenigstens einen Reinigungsanschluss 7, beispielsweise in Form mehrerer Reinigungsdüsen zum Reinigen beispielsweise der Innenwände des Brühetanks 2, einen Einspülanschluss 8 zum Einbringen von Zusätzen, einen Entnahmeanschluss 9 zum Entnehmen der Brühe, einen Einfüllanschluss 10 zum Einfüllen von Klarwasser, und wenigstens einen Rühranschluss 11, beispielsweise Düsen zum Agitieren der Brühe im Brühetank 2. Der Klarwasserbehälter 3 enthält einen Füll/Entnahmeanschluss 12.

Im Netz N sind ferner mehrere Durchflussmesser 13 und Drucksensoren 14 enthalten, die über Signalleitungen an eine vorzugsweise computerisierte Steuerung CU angeschlossen sind, an die auch Füllstandsmesser 15 im Klarwasserbehälter 3 und im Brühetank 2 angeschlossen sind.

Eine Leitung 16 für Klarwasser führt vom Füll/Entnahmeanschluss 12 des Klarwasserbehälters 3 über ein 3/2-Wegeventil 17 mit Kurzschlussschleife 17a und einem Filter 18 zur Saugseite einer selbstansaugenden Pumpe 19, zweckmäßig einer Kolbenmembranpumpe, und weiter zu einem 2/2-Wegeventil 22, das entweder manuell oder über die Steuerung CU betätigbar ist, und gegebenenfalls als Kugelventil ausgebildet ist. Die selbstansaugende Pumpe 19 wird von einer Leitungsschleife 20 umgangen, in der ein von der Druckseite der selbstansaugenden Pumpe 19 druckvorgesteuertes Druckbegrenzungsventil 21 enthalten ist (beispielsweise Druckdifferenz von etwa 10 bar).

Zum 2/2-Wegeventil 22 führt vom Entnahmeanschluss 9 des Brühetanks 2 eine Entnahmeleitung 23, die sich an einem 3/2-Wegeventil 27, zweckmäßig einem Druckregelventil bzw. einem Proportionalventil, in einen Leitungszweig 23a und einen Leitungszweig 27a aufzweigt. In der Entnahmeleitung 23 sind stromab des Entnahmeanschlusses 9 ein 2/2-Wegeventil 24, ein Filter 25 sowie stromauf des 3/2-Wegeventils 27 eine nicht selbstansaugende Kreiselpumpe 26 enthalten. Der Leitungszweig 23a führt über einen Filter 25' zu einem 2/2-Wegeventil 50, an welches über eine Leitung 26 das Sprühsystem 6 angeschlossen ist. Das 2/2-Wegeventil 50 ist zweckmäßig ein Druckregelventil oder sogar ein Proportional-Druckregelventil.

Von der Einspülschleuse 5 führt eine Leitung 28 zum Einspülanschluss 8 im Brühetank 2. Vom Klarwasser-Ansauganschluss 29 führt eine Saugleitung oder ein Saugschlauch 31, vorzugsweise mit einem zum Klarwasser-Ansauganschluss 29 sperrenden Rückschlagventil 32, zum 3/2-Wegeventil 17 mit der Kurzschlussschleife 17a. Eine Zweigleitung 16a zweigt von der Leitung 16 an der Druckseite der selbstansaugenden Pumpe 19 ab und führt über ein 3/3-Wegeventil 33 einerseits zu einer Leitung 35 zurück zur Leitung 16 und andererseits über eine Reinigungsleitung 34 zum wenigstens einen Reinigungsanschluss 7 des Brühetanks 2.

Von der Entnahmeleitung 23 zweigt zwischen dem 2/2-Wegeventil 24 und dem Filter 25 eine Leitung 36 zum Klarwasser-Ansauganschluss 29 ab, in der ein 3/3-Wegeventil 37 enthalten ist, von dem eine Leitung 38 über ein 3/3-Wegeventil 39 mit Kurzschlussschleife 39a zum Einfüllanschluss 10 im Brühetank 2 führt. An das 3/3-Wegeventil 39 mit der Kurzschlussschleife 39a ist ferner eine Leitung 40 angeschlossen, die von der Zweigleitung 23a abzweigt. Ferner zweigt von der Zweigleitung 23a eine Leitung 41 zum Rühranschluss 11 im Brühetank 2 ab, in der ein 2/2-Wegeventil 42, vorzugsweise ein Druckregelventil oder Proportionalventil, enthalten ist. Vom Filter 25' führt eine Leitung 43 zur Leitung 41 stromab des 2/2-Wegeventils 42. In der Leitung 43 ist ein weiteres 2/2-Wegeventil 44 enthalten.

Von der Entnahmeleitung 16 zweigt eine Leitung 45 in die Einspülschleuse 5 ab. An die Zweigleitung 16a kann ferner eine Möglichkeit 46 zu einer Außenreinigung angeschlossen sein.

Mit der selbstansaugenden Pumpe 19 sind eine Reinigungsfunktion mit Klarwasser über den Reinigungsanschluss 7 im Brühetank 2 oder im gesamten Netz sowie eine Entlüftungsfunktion der nicht selbstansaugenden Kreiselpumpe 26 ausführbar. Ferner ist mit der selbstansaugenden Pumpe 19 eine Klarwasser-Füllfunktion des Klarwasserbehälters 3 aus dem Klarwasser-Ansauganschluss 29 ausführbar. Die wesentlichen Grundfunktionen des Flüssigkeits-Fördersystems S, d.h. eine Sprühfunktion, eine Füllfunktion, eine Rührfunktion und eine Einspülfunktion sowie gegebenenfalls eine Entleerfunktion des Brühetanks 2 sind mit der Kreiselpumpe 26 ausführbar, sofern diese entlüftet ist.

Die Kreiselpumpe 26 kann für eine Förderleistung bis zu etwa 1.000 l/min ausgelegt sein, während die nicht selbstansaugende Pumpe 19, d.h. die Kolbenmembranpumpe, auf eine Förderleistung von nur etwa 100 - 250 l/min ausgelegt sein kann und deshalb kleinbauend und funktionssicher ist, zumal sie in einem nur Klarwasser führenden Teil 16, 16a, 34, 35, 31 des Netzes N enthalten ist, und durch das 2/2-Wegeventil 22 von dem zumindest bei der Sprühfunktion Brühe führenden Teil des Netzes N separiert ist.

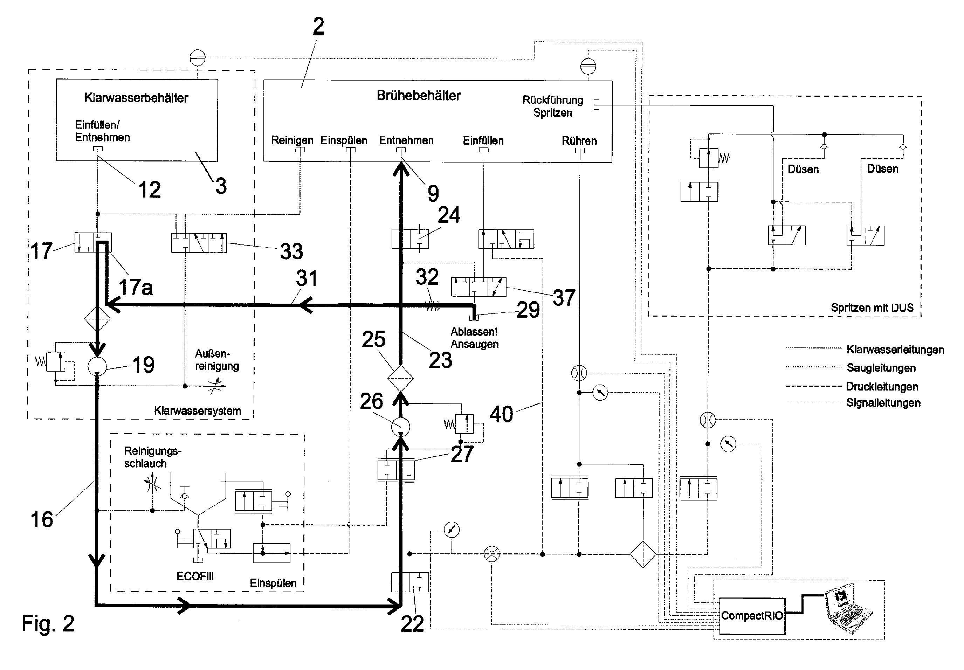

Fig. 2 verdeutlicht die Einstellung des Flüssigkeits-Fördersystems bei Ausführen der Entlüftungsfunktion durch die selbstansaugende Pumpe 19. Das 3/3-Wegeventil 37 ist in seiner Absperrstellung, wie auch das 3/3-Kaltwasser-Wegeventil 33. Die 2/2-Wegeventile 24 und 22 sind in ihren Durchgangsstellungen. Das 3/2-Wegeventil 17 ist in einer Schaltstellung, in der die Kurzschlussschleife 17a die Saugleitung/den Saugschlauch 31 mit der Saugseite der selbstansaugenden Pumpe 19 verbindet. Um die nicht selbstansaugende Kreiselpumpe 26 zu entlüften, pumpt die selbstansaugende Pumpe 19 Klarwasser über die Druckseite der Kreiselpumpe 26 und durch den Filter 25 und die Entnahmeleitung 23 und das 2/2-Wegeventil 24 gegebenenfalls bis über den Entnahmeanschluss 9 in den Brühetank 2, um Lufteinschlüsse in der Kreiselpumpe 26 und dem Leitungssystem möglichst auszutreiben.

Alternativ kann, falls der Klarwasserbehälter 3 ausreichend gefüllt sein sollte, die Entlüftungsfunktion aus dem Klarwasserbehälter 3 gespeist werden. In diesem Fall wird das 3/2-Wegeventil 17 mit der Kurzschlussschleife 17a in die in Fig. 1 gezeigte Stellung geschaltet.

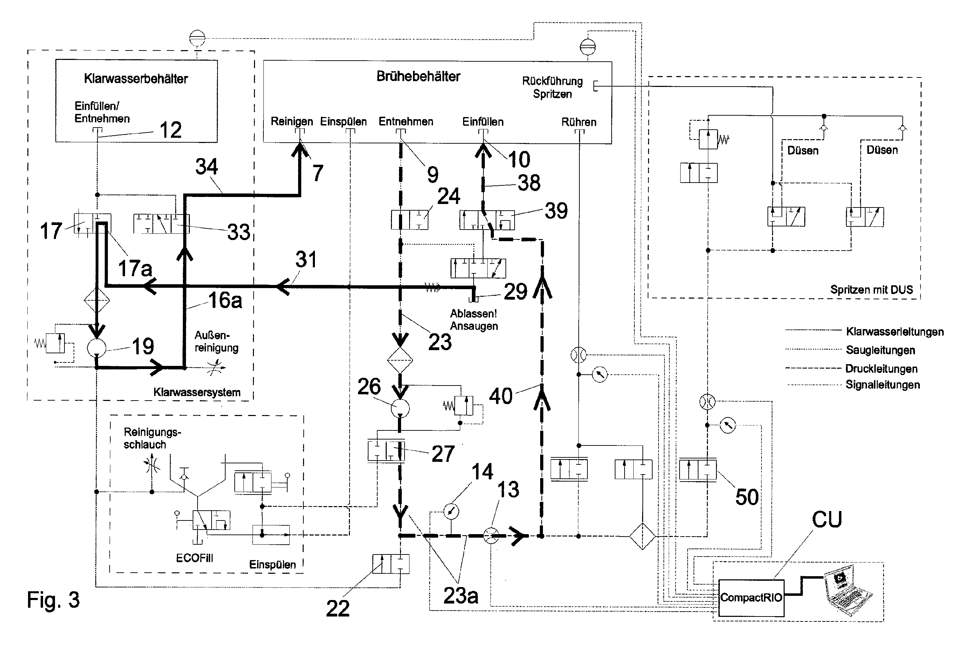

Fig. 3 verdeutlicht zwei gegebenenfalls parallel ausgeführte Funktionen, nämlich die Reinigungsfunktion und eine Spülfunktion der Kreiselpumpe 26. Diese beiden Funktionen müssen nicht notwendigerweise gleichzeitig ausgeführt werden. Für die Reinigungsfunktion ist das 2/2-Wegeventil 22 in seine Absperrstellung geschaltet, so dass die selbstansaugende Pumpe 19 bei Schaltstellung des 3/2-Wegeventils 17 wie in Fig. 2 über die Zweigleitung 16a den wenigstens einen Reinigungsanschluss 7 im Brühetank 2 speist. Hierzu ist das 3/3-Wegeventil 33 in seine Durchgangsstellung geschaltet, in der die Zweigleitung 16a mit der Reinigungsleitung 34 verbunden ist.

Bei der Spülfunktion (gestrichelt angedeutet) der Kreiselpumpe 26 pumpt die bereits entlüftete Kreiselpumpe 26 Flüssigkeit (Klarwasser oder Brühe) über die Entnahmeleitung 23 durch das auf Durchgang geschaltete 2/2-Wegeventil 24 und die Zweigleitung 23a sowie die Leitung 40 und das 3/3-Wegeventil 39 mit der Kurzschlussschleife 39a und die Leitung 38 in den Einfüllanschluss 10 des Brühetanks. Das 3/3-Wegeventil 39 ist dabei in eine Schaltstellung gestellt, in der die Leitung 40 mit der Leitung 38 verbunden ist. Die Flüssigkeit zirkuliert so lange im Kreis, bis die Kreiselpumpe 26 ihre maximale Förderleistung oder eine gewünschte Förderleistung bzw. -druck erreicht hat, was über den Drucksensor 14 und den Durchflussmesser 13 an die Steuerung CU gemeldet wird.

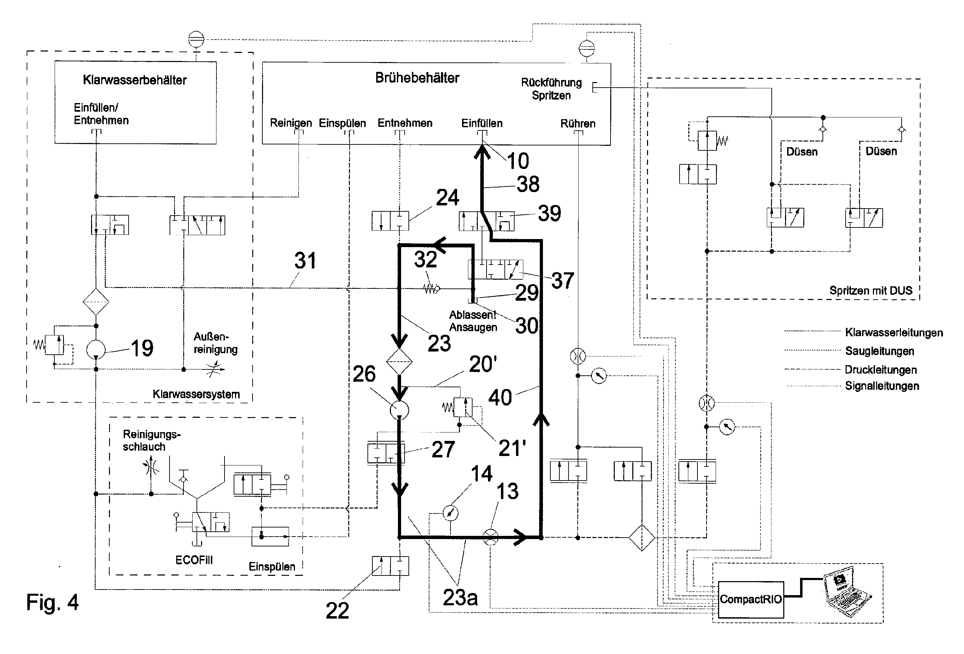

Zum Einleiten der Ausführung einer nachfolgenden Füllfunktion wird das 3/3-Wegeventil 37 gemäß Fig. 4 in seine Durchgangsstellung geschaltet, in der der Klarwasser-Ansauganschluss 29 mit der Leitung 36 zur Entnahmeleitung 23 verbunden ist, so dass die Kreiselpumpe 26 Klarwasser aus dem Klarwasser-Ansauganschluss 29 ansaugt und den Brühetank 2 füllt.

Gleichlaufend mit der Füllfunktion oder nach Erreichen eines ausreichenden Füllstandes im Brühetank 2 kann der gewünschte Zusatz über die Einspülschleuse 5 und die Leitung 28 in den Brühetank 2 eingespeist werden, in dem das 3/2-Wegeventil 27 teilweise oder voll in seine Durchgangsstellung zur Leitung 27a geschaltet wird, wobei die Pumpen-Spülfunktion, wie in Fig. 3 gezeigt, weiterhin betrieben wird, oder durch Umschalten des 2/2-Wegeventils 42 die Rührfunktion über die Leitung 41 und den wenigstens einen Rühranschluss 11 im Brühetank aktiviert wird.

Bei Ausführen der Füllfunktion mit der Kreiselpumpe 26 kann gegebenenfalls die Reinigungsfunktion mit der selbstansaugenden Pumpe weiter betrieben werden, um zusätzlich Klarwasser über den Reinigungsanschluss 7 in den Brühetank 2 einzuspeisen (Zusatzfüllfunktion).

Nachdem der Brühetank 2 ausreichend gefüllt und die gewünschte Konzentration der Brühe erreicht sind, ist das Flüssigkeits-Fördersystem S bereit für die Sprühfunktion. Zum Ausführen der Sprühfunktion (nicht gezeigt) wird das 2/2-Wegeventil 24 auf Durchgang geschaltet, während das 3/3-Wegeventil 39 wie auch das 3/3-Wegeventil 37 in ihre Sperrstellungen geschaltet, und bei in der Sperrstellung befindlichem 2/2-Wegeventil 22 das 2/2-Druckregelventil 50 auf Durchgang gestellt wird. Um gleichzeitig eine Rührfunktion der Brühe im Brühetank 2 auszuführen, kann das 2/2-Druckregelventil 42 auf Durchgang geschaltet werden und/oder ist eine Innenreinigung des Filters 25' durch Umstellen des 2/2-Wegeventils 44 auf Durchgang möglich.

Über eine Verarbeitung der Signale des Drucksensors 14 und des Durchflussmessers 13 in Fig. 4 kann die Steuerung CU gegebenenfalls die Drehzahl der Kreiselpumpe 26 regeln, die konventionell z.B. von einem Hydraulikmotor (nicht gezeigt) angetrieben wird, wie auch die selbstansaugende Pumpe 19.

In den Fig. 2 bis 4 ist das 3/2-Wegeventil 27 vereinfacht schematisch in seiner Absperrstellung zur Einspülschleuse 5 dargestellt. Fig. 4 zeigt ergänzend auch bei der Kreiselpumpe 26 eine Leitungsschleife 20' mit einem druckvorgesteuerten Druckbegrenzungsventil 21' zur Sicherstellung eines bestimmten Druckgefälles über die Kreiselpumpe 26.

Abschließend sei erwähnt, dass die genannten Ventile auch durch ein oder mehrere Ventile, die die gleiche Funktion erfüllen, ausgetauscht oder ersetzt werde können.

## Patentansprüche

1. Flüssigkeits-Fördersystem (S), insbesondere für eine Feldspritze (F), mit einer selbstansaugenden Pumpe (19) und einer nicht selbstsaugenden Kreiselpumpe (26), die saugseitig und wahlweise mit einem Klarwasser-Ansauganschluss (29) verbindbar sind, und die in ein über eine Steuerung (CU) betätigbare Ventile enthaltendes und wenigstens einen Brühetank (2), den Klarwasser - Ansauganschluss (29), Sprühdüsen (D) zum Ausbringen der Brühe und wenigstens eine Brühenzusatz- Einspülschleuse (5) einschließendes Leistungs- und/oder Schlauchnetz (N) derart eingegliedert sind, dass die Steuerung (CU) eine Füllfunktion, eine Brühetank- und/oder Netz-Reinigungsfunktion, eine Brühetank- Einspülfunktion, eine Brüherührfunktion, eine Sprühfunktion und eine Entlüftungfunktion der nicht selbstansaugenden Kreiselpumpe (26) ausführbar sind, **dadurch gekennzeichnet, dass** das Flüssigkeits-Fördersystem (S) zum Ausführen ausschließlich der Reinigungsfunktion und der Entlüftungsfunktion durch die selbstansaugende Pumpe (19) und zum Ausführen der Füll-, Einspül-, Rühr- und Sprüh-Funktionen durch die nicht selbst ansaugende, jedoch entlüftete Kreiselpumpe (26) ausgebildet ist, und dass die selbstansaugende Pumpe (19) in einem Klarwasser führenden Teil (16, 31, 34, 35) des Netzes (N) angeordnet ist, der von einem zumindest während der Ausführung der Sprühfunktion brüheführenden Teil (23, 23a, 26) des Netzes (N) separiert ist.

2. Flüssigkeits-Fördersystem nach Anspruch 1, **dadurch gekennzeichnet, dass** der Klarwasser führende Teil des Netzes (N) von dem Brühe führenden Teil durch ein Umschaltventil, vorzugsweise2/2-Wegeventil (22) separierbar ist.

3. Flüssigkeits-Fördersystem nach Anspruch 1, **dadurch gekennzeichnet, dass** zwischen dem Klarwasser-Ansauganschluss (29) und der Saugseite der Kreiselpumpe (26) und einem Einfüllanschluss (10) des Brühetanks (2) ein weiteres Umschaltventil, vorzugsweise ein 3/3-Wegeventil (37) oder 2/2 Wegeventil vorgesehen ist.

4. Flüssigkeits-Fördersystem nach Anspruch 1, **dadurch gekennzeichnet, dass** der Klarwasser führende Teil (16, 16a, 34, 35) des Netzes (N) an einen Klarwasserbehälter (3) angeschlossen ist, der mit der selbstansaugenden Pumpe (19) aus dem Klarwasser-Ansauganschluss (29) befüllbar ist.

5. Flüssigkeits-Fördersystem nach Anspruch 1, **dadurch gekennzeichnet, dass** zum Ausführen der Reinigungsfunktion an die Druckseite der selbstansaugenden Pumpe (19) über eine Bypassleitung (16a) ein Klarwasser - Umschaltventil, vorzugsweise ein 3/3-Wegeventil (33) angeschlossen ist, von dem eine Reinigungsleitung (34) zu wenigstens einem Reinigungsanschluss (7) im Brühetank (2) und eine Füllleitung (35) zu einem Füll-Entnahme-Anschluss (12) im Klarwasser-Tank (3) führen.

6. Flüssigkeits-Fördersystem nach Anspruch 1, **dadurch gekennzeichnet, dass** zwischen dem Klarwasserbehälter (3) und der selbstansaugenden Pumpe (19) ein 3/2-Wegeventil (17) mit Kurzschlussschleife (17a) angeordnet ist.

7. Flüssigkeits-Fördersystem nach wenigstens einem der vorhergehenden Ansprüche, **dadurch gekennzeichnet, dass** zwischen dem Umschaltventil, vorzugsweise 3/3-Wegeventil (37) und dem Klarwasser-Ansauganschluss (29) eine, vorzugsweise durch ein Rückschlagventil (32) abgesicherte, Saugleitung/ein Saugschlauch (31) zum 3/2-Wegeventil (17) mit der Kurzschlussschleife (17a) abzweigt.

8. Flüssigkeits-Fördersystem nach wenigstens einem der vorhergehenden Ansprüche, **dadurch gekennzeichnet, dass** zwischen dem Entnahmeanschluss (9) im Brühetank (2) und der Saugseite der Kreiselpumpe (26) ein 2/2-Wege-Entnahmeventil (24) angeordnet ist.

9. Flüssigkeits-Fördersystem nach Anspruch 1, **dadurch gekennzeichnet, dass** die selbstansaugende Pumpe (19) eine Klarwasser-Kolbenmembranpumpe ist.

10. Flüssigkeits-Fördersystem nach wenigstens einem der vorhergehenden Ansprüche, **dadurch gekennzeichnet, dass** die nicht selbstansaugende Kreiselpumpe (26) für eine Förderleistung bis zu etwa 1.000 l/min und die selbstansaugende Pumpe (19) auf eine Förderleistung von etwa 100 - 250 l/min ausgelegt sind.

11. Flüssigkeits-Fördersystem nach wenigstens einem der vorhergehenden Ansprüche, **dadurch gekennzeichnet, dass** die Entlüftungsfunktion durch die selbstansaugende Pumpe (19) für die nicht selbstansaugende Kreiselpumpe (26) über deren Druckseite bis in den Brühetank (2) ausführbar ist.

12. Flüssigkeits-Fördersystem nach Anspruch 1, **dadurch gekennzeichnet, dass** die über die selbstansaugende Pumpe (19) betreibbare Reinigungsfunktion wahlweise als Zusatzfüllfunktion des Brühetanks (2) aus dem Klarwasser führenden Teil des Netzes (N) nutzbar ist.

## Claims

1. Liquid-conveying system (S), in particular for an agricultural sprayer (F), having a self-priming pump (19) and a non-self-priming rotary pump (26), which on the suction side are optionally connectable to a clear-water suction connector (29), and which, in a power network and/or hose network (N) which contain valves which are actuatable by way of a controller (CU) and which include at least one stock tank (2), the clear-water suction connector (29), spray nozzles (D) for deploying the stock, and at least one stock-additive inflow lock (5), are integrated in such a manner that the controller (CU) a filling function, a stock-tank and/or network cleaning function, a stock-tank inflow function, a stock-stirring function, a spraying function and a venting function of the non-self-priming rotary pump (26) are executable, **characterized in that** the liquid-conveying system (S) is configured for executing exclusively the cleaning function and the venting function by the self-priming pump (19) and for executing the filling, inflow, stirring and spraying functions by the non-self-priming yet vented rotary pump (26), and **in that** the self-priming pump (19) is disposed in a part (16, 31, 34, 35) of the network (N) that conducts clear water and that is separated from a part (23, 23a, 26) of the network (N) that conducts stock at least during the execution of the spraying function.

2. Liquid-conveying system according to Claim 1, **characterized in that** the part of the network (N) that conducts clear water is separable from the part that conducts stock by a switch valve, preferably a 2/2-way valve (22).

3. Liquid-conveying system according to Claim 1, **characterized in that** a further switch valve, preferably a 3/3-way valve (37) or a 2/2-way valve, is provided between the clear-water suction connector (29) and the suction side of the rotary pump (26) and a filling connector (10) of the stock tank (2).

4. Liquid-conveying system according to Claim 1, **characterized in that** the part (16, 16a, 34, 35) of the network (N) that conducts clear water is connected to a clear-water container (3) which by way of the self-priming pump (19) is capable of being filled from the clear-water suction connector (29).

5. Liquid-conveying system according to Claim 1, **characterized in that** for executing the cleaning function, a clear-water switch valve, preferably a 3/3-way valve (33), from which a cleaning line (34) leads to at least one cleaning connector (7) in the stock tank (2), and a filling line (35) leads to a filling retrieval connector (12) in the clear-water tank (3), is connected by way of a bypass line (16a) to the pressure side of the self-priming pump (19).

6. Liquid-conveying system according to Claim 1, **characterized in that** a 3/2-way valve (17) having a short-circuit loop (17a) is disposed between the clear-water container (3) and the self-priming pump (19).

7. Liquid-conveying system according to at least one of the preceding claims, **characterized in that** between the switch valve, preferably the 3/3-way valve (37) and the clear-water suction connector (29), a suction line/a suction hose (31), preferably secured by a non-return valve (32), branches off to the 3/2-way valve (17) having the short-circuit loop (17a).

8. Liquid-conveying system according to at least one of the preceding claims, **characterized in that** a 2/2-way retrieval valve (24) is disposed between the retrieval connector (9) in the stock tank (2) and the suction side of the rotary pump (26).

9. Liquid-conveying system according to Claim 1, **characterized in that** the self-priming pump (19) is a clear-water piston diaphragm pump.

10. Liquid-conveying system according to at least one of the preceding claims, **characterized in that** the non-self-priming rotary pump (26) is conceived for a conveying performance of up to approx. 1000 l/min, and the self-priming pump (19) is conceived for a conveying performance of approx. 100 to 250 l/min.

11. Liquid-conveying system according to at least one of the preceding claims, **characterized in that** the venting function by the self-priming pump (19) for the non-self-priming rotary pump (26) is executable by way of the pressure side of the latter into the stock tank (2).

12. Liquid-conveying system according to Claim 1, **characterized in that** the cleaning function which is operable by way of the self-priming pump (19) is optionally utilizable as an additional filling function of the stock tank (2) from the part of the network (N) that conducts clear water.

## Revendications

1. Système d'extraction de fluide (S), notamment pour un pulvérisateur (F), avec une pompe (19) autoaspirante et une pompe centrifuge (26) non autoaspirante pouvant être reliées du côté d'aspiration et au choix avec un raccord d'aspiration d'eau claire (29) et incorporées de telle sorte dans un réseau de tuyaux flexibles et/ou de puissance (N) contenant des soupapes actionnables via un élément de commande (CU) et incluant au moins un réservoir de bouillon (2), le raccord d'aspiration d'eau claire (29), des buses de pulvérisation (D) pour évacuer le bouillon et au moins un sas d'admission de bouillon supplémentaire (5) que l'élément de commande (CU) une fonction de remplissage, une fonction de nettoyage de réservoir de bouillon et/ou de réseau, une fonction d'admission de réservoir de bouillon, une fonction d'agitation de bouillon, une fonction de pulvérisation et une fonction de purge de la pompe centrifuge (26) non autoaspirante sont exécutables, **caractérisé en ce que** le système d'extraction de fluide (S) est réalisé pour mettre en oeuvre exclusivement la fonction de nettoyage et la fonction de purge par le biais de la pompe (19) autoaspirante et pour mettre en oeuvre les fonctions de remplissage, d'admission, d'agitation et de pulvérisation par le biais de la pompe centrifuge (26) non autoaspirante, toutefois purgée, et que la pompe (19) autoaspirante est disposée dans une partie (16, 31, 34, 35) du réseau (N) conduisant l'eau claire séparée d'une partie (23, 23a, 26) du réseau (N) conduisant le bouillant au moins pendant l'exécution de la fonction de pulvérisation.

2. Système d'extraction de fluide selon la revendication 1, **caractérisé en ce que** la partie du réseau (N) conduisant l'eau claire peut être séparée de la partie conduisant le bouillon par une soupape d'inversion, de préférence une soupape à 2/2 voies (22).

3. Système d'extraction de fluide selon la revendication 1, **caractérisé en ce qu'**une autre soupape d'inversion, de préférence une soupape à 3/3 voies (37) ou une soupape à 2/2 voies, est prévue entre le raccord d'aspiration d'eau claire (29) et le côté d'aspiration de la pompe centrifuge (26) et un raccord de remplissage (10) du réservoir de bouillon (2).

4. Système d'extraction de fluide selon la revendication 1, **caractérisé en ce que** la partie conduisant l'eau claire (16, 16a, 34, 35) du réseau (N) est raccordée à un récipient d'eau claire (3) pouvant être rempli avec la pompe (19) autoaspirante à partir du raccord d'aspiration d'eau claire (29).

5. Système d'extraction de fluide selon la revendication 1, **caractérisé en ce que** pour mettre en oeuvre la fonction de nettoyage, une soupape d'inversion d'eau claire, de préférence une soupape à 3/3 voies (33), est raccordée au niveau du côté de pression de la pompe (19) autoaspirante via une conduite bipasse (16a), d'où une conduite de nettoyage (34) conduit à au moins un raccord de nettoyage (7) dans le réservoir de bouillon (2) et une conduite de remplissage (35) conduit à un raccord de prélèvement de remplissage (12) dans le réservoir d'eau claire (3).

6. Système d'extraction de fluide selon la revendication 1, **caractérisé en ce qu'**une soupape à 3/2 voies (17) avec boucle de court-circuit (17a) est disposée entre le récipient d'eau claire (3) et la pompe (19) autoaspirante.

7. Système d'extraction de fluide selon au moins l'une quelconque des revendications précédentes, **caractérisé en ce qu'**une conduite d'aspiration/un tuyau flexible d'aspiration (31) de préférence sécurisé par une soupape de retenue (32) conduisant à la soupape à 3/2 voies (17) avec la boucle de court-circuit (17a) se divise entre la soupape d'inversion, de préférence une soupape à 3/3 voies (37), et le raccord d'aspiration d'eau claire (29).

8. Système d'extraction de fluide selon au moins l'une quelconque des revendications précédentes, **caractérisé en ce qu'**une soupape à 2/2 voies (24) est disposée entre le raccord de prélèvement (9) prévu dans le réservoir de bouillon (2) et le côté d'aspiration de la pompe centrifuge (26).

9. Système d'extraction de fluide selon la revendication 1, **caractérisé en ce que** la pompe (19) autoaspirante est une pompe à membrane de piston d'eau claire.

10. Système d'extraction de fluide selon au moins l'une quelconque des revendications précédentes, **caractérisé en ce que** la pompe centrifuge (26) non autoaspirante est prévue pour une puissance d'extraction pouvant atteindre 1000 l/min et que la pompe (19) autoaspirante est prévue pour une puissance d'extraction d'environ 100 - 250 l/min.

11. Système d'extraction de fluide selon au moins l'une quelconque des revendications précédentes, **caractérisé en ce que** la fonction de purge par la pompe (19) autoaspirante peut être mise en oeuvre pour la pompe centrifuge (26) non autoaspirante via son côté de pression jusque dans le réservoir de bouillon (2).

12. Système d'extraction de fluide selon la revendication 1, **caractérisé en ce que** la fonction de nettoyage pouvant être actionnée via la pompe (19) autoaspirante peut servir au choix de fonction de remplissage supplémentaire du réservoir de bouillon (2) à partir de la partie du réseau (N) conduisant l'eau claire.
